# EUROPÄISCHE PATENTANMELDUNG

(11) **EP 2 093 851 A1**
(43) Veröffentlichungstag der Anmeldung: **26.08.2009**
(21) Anmeldenummer: 08003032.3
(22) Anmeldetag: 19.02.2008
(51) Int. Cl.: H02G 3/00, H02G 3/12

(54) **Gerät zur Verlegung von Hohlraumschalterdosen/Schalterdosen "ADA 503"**

(71) Anmelder: Barbagiovanni, Piseia Sergio, 98070 Torrenova (ME) (IT)
(72) Erfinder: Barbagiovanni, Piseia Sergio, 98070 Torrenova (ME) (IT)

(57) **Zusammenfassung**

Das Werkzeug enthält eine Maske zum Festlegen der Umrisse einer Höhlung, die aus der Wand gestemmt werden muss, sowie ein Paar von Wasserwaagen zum korrekten Ausrichten der besagten Maske. Gemäß der Erfindung besteht es aus einem Rahmengerät (10.1) mit zwei Längsbalken (11) und zwei Querbalken (12), mit dem das Messen der Lippe (L) erfolgt, welche die Öffnung (A) einer Hohlraumschalterdosen / Schalterdosen (S3) begrenzt, und das an der umlaufenden Randleiste (B) der Steckdose selbst anliegt, so dass man einen leichten Druck auf die Steckdose ausüben kann. Es ragt Ober ihre Öffnung hinaus.

## Beschreibung

Die vorliegende Erfindung betrifft ein Werkzeug zum Verlegen einer Hohlraumschalterdosen / Schalterdosen mit Taststein. Die Erfindung betrifft außerdem das Vorgehen beim Verlegen einer Hohlraumschatterdosen / Schalterdosen mit Hilfe dieses Werkzeugs.

Eine Hohlraumschalterdosen / Schalterdosen mit Taststein ist eine Kunststoffkassette von genormten Abmessungen, die in die Wand versenkt wird, und in der ein oder mehrere elektrische Kontakte befestigt und angeschlossen werden, die ebenfalls genormte Abmessungen haben. Ein elektrischer Kontakt ist zum Beispiel ein Schalter, eine Steckdose oder ähnliches und dient dazu, ein Elektrogerät zu speisen. Die Hohlraumschalterdosen / Schalterdosen mit Taststein hat im Wesentlichen Quaderform und weist an ihrer Öffnung eine umlaufende Randzunge auf, die seitlich nach außen vorspringt und/oder eine umlaufende Randleiste, an der eine Lippe vorsteht, welche die Öffnung begrenzt Diese liegt an der Oberfläche der rohen Wand auf, in welche die Dose versenkt ist. Die Dose wird üblicherweise in eine rohe Mauer oder Ähnliches versenkt, in der zuerst eine entsprechende Höhlung gestemmt wurde. Nach dem Einsetzen befindet sich der Rand oder die Randleiste im Wesentlichen bündig auf der Außenfläche der Wand, während sich die Lippe der Öffnung über die Oberfläche der Wand hinaus erstreckt. Sobald diese Wand einen Rohputz oder Feinputz oder Ähnliches erhalten hat, liegt die Lippe der Dose im Wesentlichen bündig auf der verputzten Oberfläche auf.

Nach der brahchenüblichen Praxis werden Hohlraumschalterdosen / Schalterdosenn mit genormten Abmessungen benutzt, die z.B. mit den Codes 503, 504, 505 und 506 bezeichnet werden. Diesen Dosen haben alle im Wesentlichen die gleiche Höhe und Tiefe, unterscheiden sich aber in der Breite. Die Dose 506 hat die doppelte Breite der Dose 503, während die Dosen 504 und 505 jeweils dazwischen liegende Breiten aufweisen. In der Praxis enthält die Dose 503 drei Kontakte, die Dose 504 vier Kontakte, die Dose 505 fünf Kontakte und die Dose 506 sechs Kontakte.

Aus dem Dokument US B1 6,434,848 ist ein Werkzeug zum Verlegen einer Hohlraumschalterdosen / Schalterdosen mit Taststein bekannt, das aus zwei mit einander kombinierten rechteckigen Platten besteht, die eine Maske zum Nachzeichnen des Außenumfangs der Höhlung auf der Wand bilden, die zum Versenken der Dose ausgestemmt werden muss. Die beiden Platten tragen jeweils eine Wasserwaage, die horizontal bzw. vertikal angeordnet ist Dieses Werkzeug dient nicht zur Ausführung irgendeiner anderen Arbeit beim Verlegen der Hohlraumschafterdosen / Schalterdosen. Andererseits muss der Arbeiter, sobald er die Höhlung angezeichnet und ausgestemmt hat, und nachdem er diese teilweise mit schnellbindendem Mörtel, Stuckgips, oder Ähnlichem ausgefüllt hat, die Hohlraumschalterdosen / Schalterdosen teilweise in sie einführen und sie in der richtigen Tiefe und entsprechend einer geeigneten horizontalen bzw. vertikale Ebene anordnen, sowie entsprechend einer Ebene, die ihren Rand enthält und im Wesentlichen parallel zur Oberfläche der rohen Wand verläuft. Diese Arbeiten, die an sich schon schwierig sind, müssen durchgeführt werden, indem man die Hände an der Lippe der Dosenöffnung hat, wobei sie oft in Berührung mit dem frischen Mörtelmaterial kommen, was den Vorgang noch komplizierter macht.

Die vorliegende Erfindung geht von der Feststellung dieser Unannehmlichkeiten aus und beabsichtigt, für sie Abhilfe zu schaffen.

Ein Zweck der vorliegenden Erfindung ist, ein Werkzeug zum Verlegen einer Hohlraumschalterdosen / Schalterdosen mit Taststein zu schaffen, mit dem man die Dose einfach und schnell korrekt im Mauerwerk anbringen kann, wodurch dem Arbeiter die Ausführung dieser Aufgabe erleichtert und die Arbeitsproduktivität verbessert wird.

Ein weiterer Zweck ist der, ein Werkzeug der angegebenen Art zu schaffen, das einen einfachen Aufbau hat, leicht anzuwenden und kostengünstig ist.

Ein weiterer Zweck der Erfindung ist der, ein Verfahren für das Verlegen von Hohlraumschalterdosen / Schalterdosenn mit Taststein zu schaffen, das unter Verwendung des oben genannten Werkzeugs erfolgt, und das sich leicht, bequem und präzise ausführen lässt. Angesichts dieser Zwecke bietet die vorliegende Erfindung ein Werkzeug zum Verlegen von Hohlraumschalterdosen / Schalterdosenn mit Taststein, dessen Grundmerkmal den Gegenstand von Anspruch 1 bildet.

Die Erfindung betrifft außerdem das Vorgehen beim Verlegen einer Hohlraumschalterdosen / Schalterdosen mit Taststein, das mit Hilfe des oben genannten Werkzeugs durchgeführt wird, und dessen Grundmerkmal den Gegenstand von Anspruch 16 bildet.

Weitere vorteilhafte Merkmale sind in den jeweils zugehörigen Ansprüchen beschrieben.

Die besagten Ansprüche verstehen sich als hier vollständig angeführt

Die vorliegende Erfindung geht besser aus der nachfolgenden Detailbeschreibung hervor, wobei auf die beiliegende Zeichnung Bezug genommen wird, die als nicht einschränkendes Beispiel geliefert wird. In dieser Zeichnung ist
- die Abb. 1 eine schematische Aufsicht des Werkzeugs gemäß der Erfindung, wie es zum Verlegen einer Hohlraumschalterdosen / Schalterdosen mit Taststein vom Typ 503 beim Nachzeichnen des Umfangs der Höhlung angewandt wird, die in eine rohe Wand zu stemmen ist;
- die Abb. 2 zeigt eine in diese rohe Wand gestemmte Höhlung;
- die Abb. 3 zeigt in Aufsicht das Werkzeug gemäß der Erfindung, das in eine Hohlraumschalterdosen / Schalterdosen vom Typ 503 eingeschoben ist, die bereits in der besagten Höhlung angebracht wurde, sowie dessen Einsatz zum korrekten Positionieren der Dose beim Versenken;
- die Abb. 4 ist eine Schnittansicht gemäß der Linie IV-IV von Abb. 3;
- die Abb. 5 ist eine ähnliche Ansicht wie Abb. 4, zeigt aber die in die Wand korrekt versenkte Steckdose nach Abschluss der Arbeit;
- die Abbildungen 6 und 7 sind ebenfalls ähnliche Ansichten wie die von Abb. 4, zeigen aber eine Ausführungsvariante des Werkzeugs und der Vorgangsweise gemäß der Erfindung;
- die Abbildungen 8, 10 und 11 zeigen in Aufsicht und mit strichliert gezeichneten Teilen eine zweite, als Beispiel angeführte Ausführungsform des Werkzeugs gemäß der Erfindung jeweils in Anwendung an einer Hohlraumschalterdosen / Schalterdosen vom Typ 503, 504 und 505;
- die Abb. 9 ist eine Detailansicht des Details IX von Abb. 8;
- die Abbildungen 12 zeigt in Aufsicht und mit strichliert gezeichneten Teilen eine dritte, als Beispiel angeführte Ausführungsform des Werkzeugs gemäß der Erfindung in Anwendung an einer Hohlraumschalterdosen / Schalterdosen vom Typ 503;
- die Abbildungen 13 zeigt in Aufsicht und mit strichliert gezeichneten Teilen zwei Werkzeugteile nach der dritten Ausführungsform der Erfindung, die miteinander verbunden sind, in Anwendung an einer Hohlraumschafterdosen / Schalterdosen vom Typ 506.

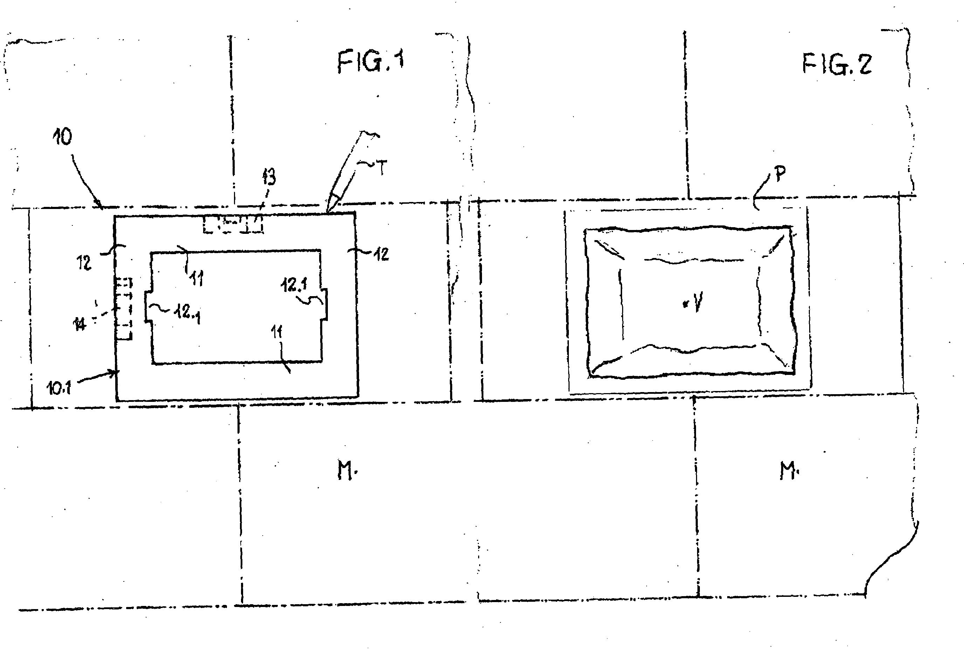

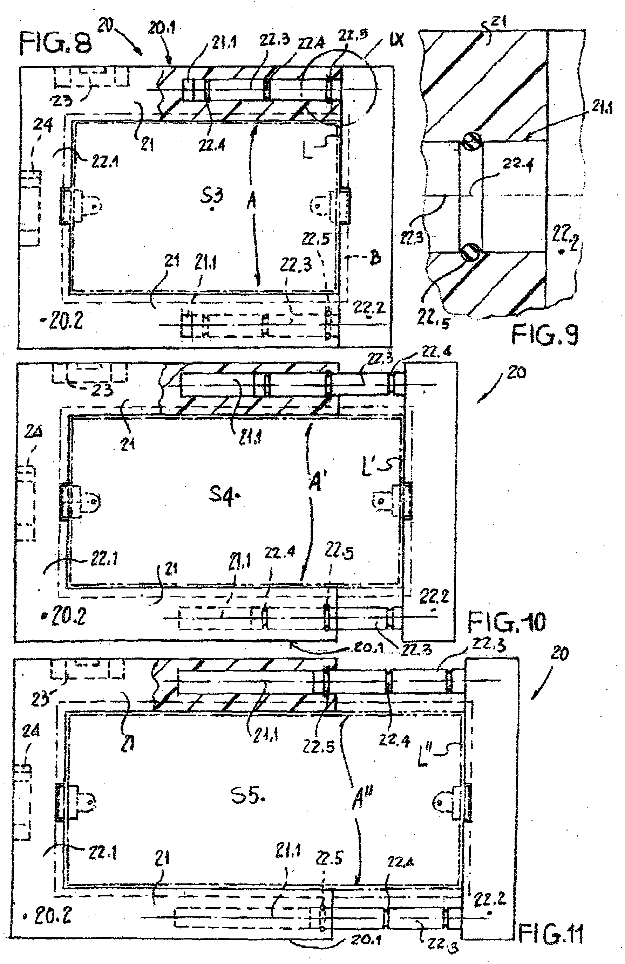

In den Abbildungen 1 bis 5 und in Abb. 10 ist das Werkzeug zum Verlegen von Hohlraumschalterdosen / Schalterdosenn mit Taststein entsprechend einem ersten Ausführungsbeispiel der Erfindung angegeben.

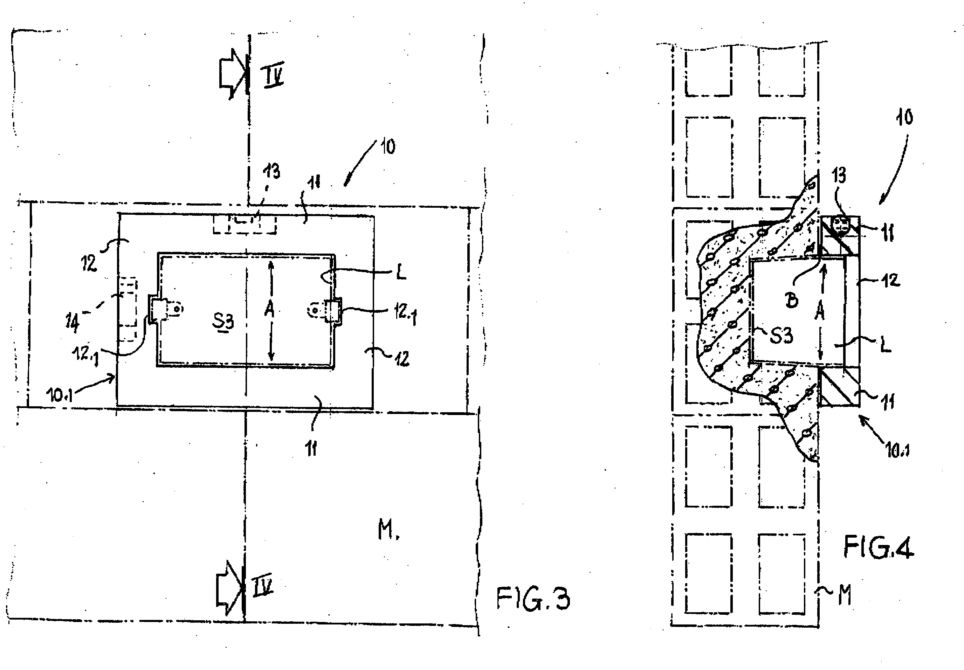

Das Werkzeug 10 besteht aus einem feststehenden rechteckigen Rahmen mit Randleiste 10.1, der zwei Längsbalken 11 und zwei Querbalken 12, die paarweise parallel und einander gegenüber liegend angeordnet sind. An einem der Längsbalken 11 und an einem der Querbalken 12 sind jeweils die Wasserwaagen 13 und 14 eingebaut Der besagte feststehende Rahmen mit Randleiste 10.11 ist z.B. aus Kunststoff, Metall oder einem beliebigen anderen Material hergestellt, das jedoch steif sein muss. Wie aus den Abbildungen 3 und 4 hervorgeht, erfolgt mit dem Rahmen (10.1) das Messen der Lippe (L), welche die Öffnung (A) einer Hohlraumschalterdosen /Schalterdosen (S3) vom Typ 503 begrenzt. Der Rahmen liegt an der umlaufenden Randleiste (B) der Steckdose selbst an, so dass man einen leichten Druck auf die Steckdose S3 ausüben kann. Er ragt über ihre Öffnung A hinaus.

Man wird bemerken, dass die Querbalken 12 in ihrem mittleren Abschnitt innen jeweils Aussparungen 12.1 aufweisen, welche den Vorsprüngen der Dose S3 mit den Bohrungen für die Befestigungsschrauben entsprechen, die für die Zwecke der vorliegenden Erfindung keine Bedeutung haben.

Verfahren zum Verlegen einer Hohlraumschalterdosen / Schalterdosen S3 mit dem Werkzeug 10.

Der Arbeiter legt an eine rohe Wand M in dem Bereich, wo eine Dose S3 versenkt werden soll; das Werkzeug 10 an und bringt z.B. die Wasserwaage 13 in die Waagrechte. Mit einem Bleistift T zeichnet er dann auf der Mauer M den Außenumriss des Rahmens 10.1 nach, wobei er diesen als Maske benutzt (Abb. 1).

Nun stemmt er in die Wand M eine Höhlung V innerhalb des Umrisses P, der durch das Nachzeichnen des Außenumrisses des Rahmens 10.1 entstanden ist (Abb. 2). Dann füllt er fachgerecht die Höhlung V mit Stuckgips oder schnell bindendem Mörtel. Dann setzt er das Werkzeug 10 auf die Lippe L der Öffnung A der Dose S3 und bringt es in Berührung mit dem Rand B derselben. Er fasst dabei das Werkzeug selbst an, während er die Dose S3 in die Höhlung V versenkt, bevor der Stuckgips oder der Mörtel gebunden hat. Diese Arbeit führt er aus, indem er das Werkzeug 10 nach den Anzeigen mindestens einer der beiden Wasserwaagen 13 und 14 ausrichtet, während er es an die Wand M heranführt, so dass dann der Rand B im Wesentlichen bündig auf der vorderen Wandfläche aufliegt (Abb. 4).

Während der Stuckgips oder der Mörtel abbindet, nimmt der Arbeiter das Werkzeug 10 von der besagten Lippe L der Dose S3 ab. Diese ragt über die vordere Fläche der

Wand M heraus. Die Dose S3 ist damit korrekt und stabil in die Höhlung V der rohen Wand M versenkt.

Dann wird die Wand M auf die übliche Weise mit Rohputz und Feinputz I versehen, wobei die Lippe L der Dose S überdeckt wird.

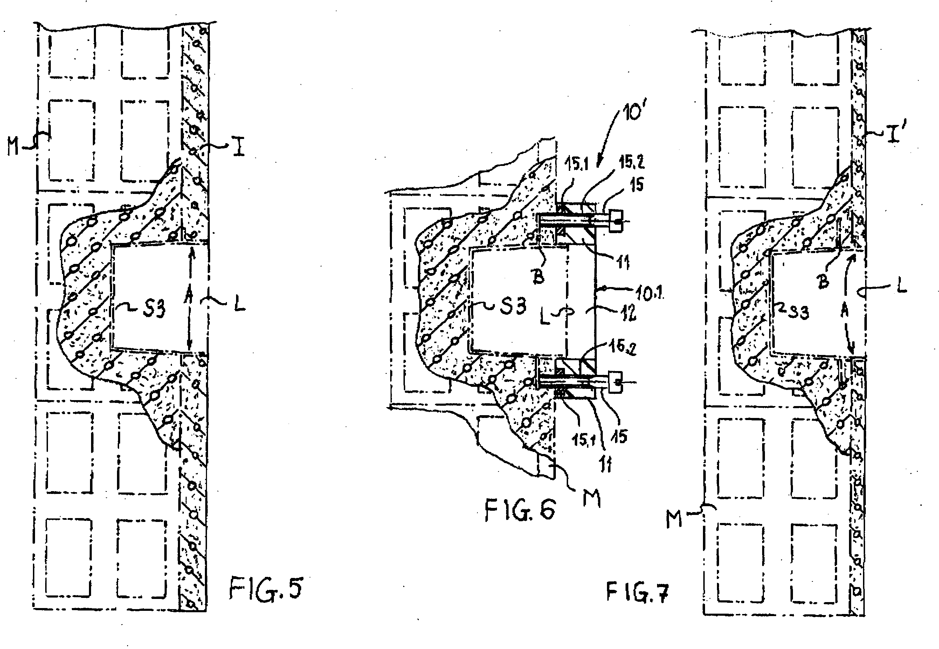

Die Abbildungen 6 und 7 zeigen eine Ausführungsvariante des Werkzeugs gemäß der Erfindung, hier als 10' bezeichnet.

Das besagte Werkzeug 10' ist im Wesentlichen ähnlich wie das oben beschriebene Werkzeug 10, weist aber außerdem ein Paar von Stellschrauben 15 auf, deren Gewindestift in zugehörige Schraubenmuttem 15.1 eingeschraubt ist, und die in den zugehörigen länglichen Löchern 15.2 sitzen. Diese sind jeweils in der Mitte eines Längsbalkens11 angebracht und haben jeweils eine Achse, die im rechten Winkel zu der Ebene steht, auf welcher der Rahmen 10.1 auf der Dose S3 aufliegt In dieser Position berührt das freie Ende des Stifts der Schrauben 15 den Rand B der Dose 3, während die Schlitzköpfe dieser Schrauben über den Rahmen 10.1 zum Arbeiter hin herausragen. Dieser kann ihre Ausdehnung mit einem Schraubenzieher regulieren. Dadurch kann er den Abstand des Rahmens 10.1 vom Rand B regulieren, wobei er die wesentliche Parallelität desselben aufrecht erhalten muss. Damit wird die Dose S3 zusammen mit dem Rand B in den Mörtel oder Stuckgips der Höhlung V versenkt, wobei der Rand z.B. etwa 2 oder 3 mm eindringt, bis der Rahmen 10.1 bündig auf der Oberfläche der rohen Wand M aufliegt Die Lippe L der Dose S3 ragt über die besagte Oberfläche entsprechend weniger hinaus, wodurch eine geringere Stärke der Putzschicht I' möglich wird, die zum Beispiel mit modernen Techniken wie etwa einer Sprühmaschine auf der Wand aufgetragen wird.

Die Abbildungen 8 bis 11 zeigen eine zweite Ausführungsvariante des Werkzeugs gemäß der Erfindung, hier als 20 bezeichnet.

Dieses besagte Werkzeug 20 ist im Aufbau ähnlich wie das Werkzeug 10, es besteht also aus einem rechtwinkligen feststehenden Rahmen mit einer Randleiste 20.1 und umfasst ein Paar von Längsbalken 21 und ein Paar von Querleisten, die jeweils mit 22.1 und 22.2 bezeichnet sind. Ein Längsbalken 21 sowie der Querbalken 22.1 tragen jeweils eine eingebaute horizontale Wasserwaage 23 bzw. vertikale Wasserwaage 24. Außerdem sind die Längsbalken 21 dieses Rahmens mit Randleiste 20.1 teleskopisch aus- bzw. einziehbar.

In der eingezogenen Teleskopstellung der besagten Längsbalken 21 erfolgt mit dem Rahmen 20.1 das Messen der Lippe L, welche die Öffnung A einer Hohlraumschafterdosen / Schalterdosen S3 vom Typ 503 begrenzt. Der Rahmen liegt an der umlaufenden Randleiste B der Steckdose selbst an (wie der Rahmen 10.1 des Werkzeugs 10 in Abb. 4), so dass man einen leichten Druck auf die Steckdose S3 ausüben kann. Er ragt über ihre Öffnung A hinaus.

In einer auf mittlere Stellung ausgezogenen Position der besagten Längsbalken 21 kann man das Messen der Lippe L' durchführen, welche die Öffnung A' einer Hohlraumschalterdosen / Schalterdosen mit Taststein S4 vom Typ 504 begrenzt (Abb. 9), und den Rahmen an die Randumfassung der Dose anlegen. Bei einer ganz ausgezogenen Teleskopstellung der Längsbalken 21 kann man mit diesem Rahmen das Messen der Lippe L" durchführen, welche die Öffnung A" einer Steckdose mit Taststein S5 vom Typ 505 (Abb. 11) begrenzt, und den Rahmen an die Randumfassung der Dose anlegen.

Zu diesem Zweck ist dieser Rahmen mit Randleiste 20.1 in zwei miteinander verbundenen Teilen mit Teleskopauszug gebaut. Also: (I) eine "C"-förmige Struktur 20.2., zu der die beiden Längsbalken 21 und der Querbalken 22.1 gehören, und (II) der weitere Querbalken 22.2. Die Längsbalken 21 weisen jeweils längsseits angeordnete Blindlöcher 21.1 auf, die auf der Fläche des vom Querbalken 22.1 entfernteren Endes angebracht sind, und in die beim Ausziehen entsprechende zylindrische Stifte 22.3 teilweise eingreifen, die am anderen Querbalken 22.2 angebracht sind. Diese Stifte 22.3 weisen je drei rundumlaufende Kehlungen 22.4 auf, in die abwechselnd ein zugehöriger O-Ring 22.5 eingeschoben wird, der fix in einem entsprechenden Sitz am Längsbalken 21 bei der Öffnung jedes Lochs 21.1 montiert ist (Abb. 9). Diese Anordnung stellt die Stabilität der Längsbalken 21 in ihren verschiedenen, oben beschriebenen Arbeitspositionen sicher. In der eingezogenen Teleskopstellung der Längsbalken 21, in welcher der Rahmen 20.1 die Lippe L der Dose S3 aufnimmt, nehmen die besagten O-Ringe 22.5 die Kehlung 22.4 jedes Stifts 22.3 ein. Diese Kehlung liegt dem Querbalken 22.2 am nächsten (Abb. 8).

In der mittleren Teleskopstellung der Längsbalken 21, in welcher der Rahmen 20.1 die Lippe L' der Dose S4 aufnimmt, nehmen die besagten O-Ringe 22.5 die mittlere Kehlung 22.4 jedes Stifts 22.3 ein (Abb. 10).

In der maximal ausgezogenen Teleskopstellung der Längsbalken 21, in welcher der Rahmen 20.1 die Lippe L" der Dose S5 aufnimmt, nehmen die besagten O-Ringe 22.5 die Kehlung 22.4 jedes vom Querbalken 22.2 am entferntesten liegenden Stifts 22.3 ein (Abb. 11).

Der oben genannte Aufbau verleiht dem Werkzeug 20 eine große Flexibilität bei seinem Einsatz.

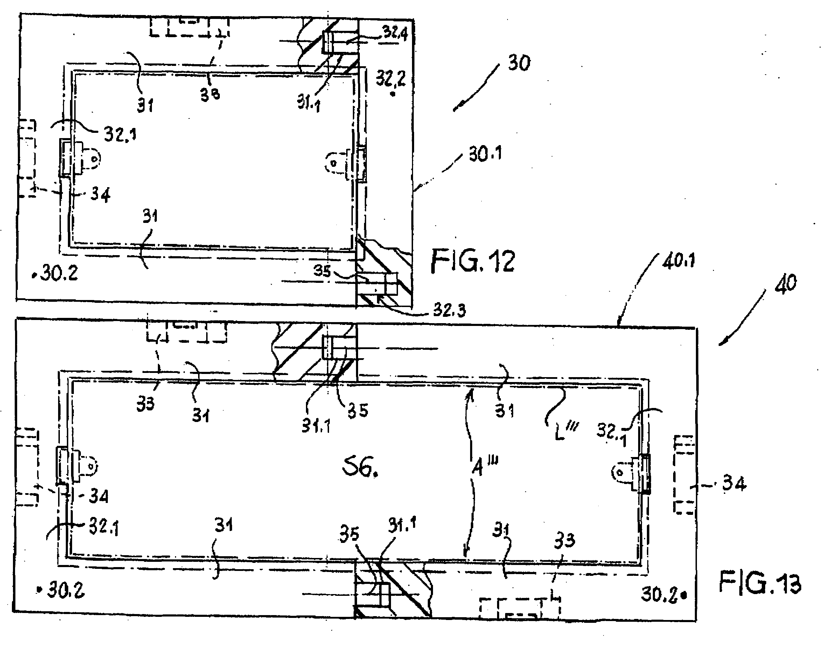

Bei der dritten Form eines Ausführungsbeispiels des Werkzeugs gemäß der Erfindung, die in Abbildung 12 illustriert ist, umfasst dieses Werkzeug, hier mit 30 bezeichnet, einen Rahmen 30.1, der in zwei voneinander trennbaren Teilen gebaut ist. Also: eine "C"-förmige Struktur 30,2., zu der die beiden Längsbalken 31 und der Querbalken 32.1 gehören, und der weitere Querbalken 32.2, der von der besagten Struktur 30.2 getrennt ist.

Der Querbalken 32.1 und ein Längsbalken 31 tragen jeweils eine eingebaute horizontale Wasserwaage 33 bzw. vertikale Wasserwaage 34.

An der "C"-förmigen Struktur 30.2 ist am freien Ende eines Längsbalkens 31 ein Montagedom 35 befestigt, der bei der Verlängerung des Längsbalkens vorsteht, während am freien Ende des anderen Längsbalken ein Blindloch 31.1 angebracht ist, das dazu vorgesehen ist, bei leichtem Druck einen gleichen Dom wie den Dom 35 aufzunehmen.

Am Querbalken 32.2 ist ein Blindloch 32.3 angebracht, in das der besagte Dom 35 eingreift, der am Längsbalken 31 befestigt ist, sowie ein Dom 32.4, der gleich wie dieser Dom 35 ist, und der bei leichtem Druck in das besagte Loch 31.1 des anderen Längsbalken 31 eingreift.

Diese Anordnung ermöglicht, von zwei Werkzeugen 30 die Querbalken 32.2 abzunehmen, eines davon um 180° zu drehen, und die beiden "C"-förmigen Strukturen 30.2 mit den jeweiligen Längsbalken 31 Kopf an Kopf miteinander zu verbinden. Bei dieser Anordnung greifen die jeweiligen Montagedome 35 bei leichtem Druck in die entsprechenden Löcher 31.1 ein und es wird so ein Rahmen mit Randleiste 40.1 gebildet, den man auseinander nehmen kann. Damit erhält man ein Werkzeug 40, mit dem man die Lippe L"' messen kann, welche die Öffnung A"' einer Hohlraumschatterdosen / Schalterdosen mit Taststein S6 vom Typ 506 begrenzt (Abb. 13), und den Rahmen an die Randumfassung der Dose anlegen.

Wie aus dem oben Gesagten hervorgeht, bietet die vorliegende Erfindung ein Werkzeug für das Verlegen von Hohlraumschalterdosen / Schalterdosenn von verschiedenen Abmessungen, das gestattet, die in der Vorrede dargelegten Zwecke auf einfache, sichere und kostengünstige Weise zu verfolgen.

Wenn auch die Anwendung des Werkzeugs gemäß der Erfindung für das Verlegen von Hohlraumschalterdosen / Schalterdosenn in horizontaler Stellung beschrieben ist, so eignet sich das Werkzeug klarerweise auch gut für die Verlegung von Hohlraumschalterdosen / Schalterdosenn in vertikaler Stellung, da ja zwei Wasserwaagen vorhanden sind, von denen eine an einem Längs- und die andere an einem Querbalken des Werkzeugs angebracht ist.

Vorteile des Werkzeugs und des Verfahrens gemäß der Erfindung:
- Einfache Ausführung der Arbeit, da die Hände des Arbeiters weder mit der Steckdose, noch mit den Mörtelmaterialien in Berührung kommt, sondern ausschließlich nur mit dem Werkzeug gemäß der Erfindung, wobei man einen sehr guten Griff am Werkzeug selbst hat. Außerdem kann das Verlegen einer Hohlraumschalterdosen / Schalterdosen mit dem Werkzeug gemäß der Erfindung vom Arbeiter mit nur einer Hand ausgeführt werden.
- Der Arbeiter kann die Wasserwaage bei der Arbeit gut im Blick behalten.
- Zeitersparnis und Präzision beim Verlegen einer Hohlraumschalterdosen /Schalterdosen.
- Korrekte Stellung der Hohlraumschalterdosen / Schalterdosen mit dem Werkzeug gemäß der Erfindung hinsichtlich des Mauerverputzes.

Natürlich können in der Praxis zu den hier nur als Beispiele angeführten Varianten zahlreiche andere Varianten hinzugefügt werden, ohne dass damit der Umfang der Erfindung und damit die Domäne des vorliegenden industriellen Schutzrechts verlassen wird.

So kann zum Beispiel in den Öffnungen 12.1, die den Vorsprüngen der Dose S3 mit Bohrungen für Befestigungsschrauben entsprechen, eine Federzunge montiert werden, welche die Öffnung normalerweise geschlossen hält, aber beim Montieren des Werkzeugs an der entsprechenden Hohlraumschalterdosen / Schalterdosen elastisch zurückweicht Solle Federzungen kehren beim Abnehmen des Werkzeugs automatisch in die geschlossene Stellung zurück und gewährleisten damit die Dichtigkeit der Öffnungen gegen das Eindringen von Fremdkörpern.

Andererseits kann man statt der Stellschrauben 15 zum Regulieren des Abstands zwischen dem Werkzeug gemäß der Erfindung, das auf eine Hohlraumschalterdosen /Schalterdosen aufgesetzt ist, und dem Rand der Dose auch Abstandhalter mit Rahmenleiste zwischen diesen beim Arbeitsvorgang einsetzen.

Es ist darauf hinzuweisen, dass in der voranstehenden Beschreibung und in den nachfolgenden Ansprüchen der Begriff "Rand" in Bezug auf die Hohlraumschalterdosen / Schalterdosen auch zur Bezeichnung einer umlaufenden Randleiste benutzt wird, die alternativ zum Rand der Dose vorhanden sein kann.

## Patentansprüche

1. Werkzeug zum Verlegen einer elektrischen Hohlraumschalterdosen **/** Schalterdosen mit Tastkem, zu dem eine Maske zum Nachzeichnen des Umrisses einer Höhlung gehört, die in eine Mauer zu stemmen ist, sowie ein Paar von Wasserwaagen für die korrekte Ausrichtung der besagten Maske, **gekennzeichnet durch** die Tatsache, dass es einen Rahmen mit Randleiste umfasst (10.1, 20.1, 30.1, 40.1), der zwei Längsbalken (11, 21, 31) und zwei Querbalken (12, 22.1, 22.2, 32.1, 32.2) aufweist, und mit dem das Messen der Lippe (L, L', L", L"') ausgeführt wird, welche die Öffnung (A, A', A", A'") einer elektrischen Steckdose mit Taststein (S3, S4, S5, S6) begrenzt, und der auf dem umlaufenden Rand (B) der Dose aufliegt, so dass man auf die Dose leichten Druck ausüben kann und sie Ober die Öffnung derselben hervorragen lassen kann.

2. Werkzeug gemäß Anspruch 1, **gekennzeichnet durch** die Tatsache, dass die besagten beiden Wasserwaage (13, 14, 23, 24, 33, 34) jeweils mit einem Längsbalken und einem Querbalken des besagten Rahmens fest verbunden sind.

3. Werkzeug gemäß Anspruch 1 und/oder 2, **gekennzeichnet durch** die Tatsache, dass die besagten Querbalken (12) in ihrem Mittelteil innen entsprechende Aussparungen (12.1) aufweisen, die den Vorsprüngen einer elektrischen Dose (S2) entsprechen, die in eine Wand zu versenken ist

4. Werkzeug gemäß einem oder mehreren der vorhergehenden Ansprüche, **gekennzeichnet durch** die Tatsache, dass der besagte Rahmen (20.1) ausziehbar ist, so dass er an elektrische Dosen (S3, S4, S5) von verschiedener Breite angepasst werden kann.

5. Werkzeug gemäß Anspruch 4, **gekennzeichnet durch** die Tatsache, dass der besagte Rahmen (20.1) teleskopisch ausziehbare Längsbalken (21) hat.

6. Werkzeug gemäß Anspruch 4 und/oder 5, **gekennzeichnet durch** die Tatsache, dass der besagte Rahmen (20.1)
in zwei miteinander verbundenen Teilen mit Teleskopauszug gebaut ist. Also: (I) eine "C"-förmige Struktur (20.2), zu der die beiden Längsbalken (21) und der Querbalken (22.1) gehören, und (II) der andere Querbalken (22.2).

7. Werkzeug gemäß dem Anspruch 5 und/oder 6, **gekennzeichnet durch** die Tatsache, dass die Längsbalken (21) jeweils längs laufende Blindlöcher (21.1) aufweisen, in die beim Ausziehen entsprechende Stifte (22.3) teilweise eingreifen, die mit einem Ende am anderen Querbalken (22.2) befestigt sind.

8. Werkzeug gemäß Anspruch 7, **gekennzeichnet durch** die Tatsache, dass diese Stifte (22.3) je drei rundumlaufende Kehlungen (22.4) aufweisen, in die abwechselnd ein zugehöriger O-Ring (22.5) eingeschoben wird, der fix in einem entsprechenden Sitz am Längsbalken (21) bei jedem Loch (21.1) montiert ist

9. Werkzeug gemäß einem oder mehreren der Ansprüche von 4 bis 8, **gekennzeichnet durch** die Tatsache, dass der besagte Rahmen (20.1) in eingezogener Teleskopstellung seiner Längsbalken (21) die Lippe (L) einer ersten Dose (S3) von kleiner Breite umschließt, in einer mittleren Teleskopstellung seiner Längsbalken (21) die Uppe (L') einer weiteren Dose (S4) von größerer Breite und in der Stellung mit maximalem Teleskopauszug seiner Längsbalken (21) die Lippe (L") einer Dose (S5) von noch größerer Breite umschließt.

10. Werkzeug gemäß einem oder mehreren der Ansprüche von 1 bis 3, **gekennzeichnet durch** die Tatsache, dass es aus einem Rahmen (30.1) mit zwei von einander trennbaren Teilen besteht. Also: (I) eine "C"-förmige Struktur (30.2), zu der die beiden Längsbalken (31) und der Querbalken (32.1) gehören, und (II) der weitere Querbalken (32.2), der von der besagten Struktur (30.2) getrennt ist

11. Werkzeug gemäß Anspruch 10, **gekennzeichnet durch** die Tatsache, dass bei der besagten "C"-förmigen Struktur (30.2) am freien Ende eines Längsbalkens (31) ein erstes abmontierbares Verbindungselement (35) angebracht ist, während am freien Ende des anderen Längsbalkens ein erstes Blindloch (31.1) angebracht ist, sowie **durch** die Tatsache, dass am anderen Querbalken (3.22) ein zweites Blindloch (32.3) und ein zweites abnehmbares Verbindungselement (32.4) angebracht sind, und **durch** die Tatsache, dass bei zusammengebautem Rahmen (30.1) das besagte erste und das zweite abnehmbare Verbindungselement (35, 32.4) mit leichtem Druck in die besagten Löcher (32.3, 31.1) eingeführt sind.

12. Werkzeug gemäß Anspruch 11, **gekennzeichnet durch** die Tatsache, dass es aus zwei "C"-förmigen Strukturen (30.2) von zwei Rahmen mit Randleiste (30.1) besteht, von denen einer gegenüber dem anderen um 180° gedreht ist und die mit den jeweiligen Längsbalken (31) Kopf an Kopf miteinander verbunden sind. Diese bilden einen Rahmen mit Randleiste (40.1) eines auseinander nehmbaren Werkzeugs (40), das die Lippe (L"') von elektrischen Dosen (S6) von doppelter Breite der Dose (S3) umfasst, für die das Werkzeug (30) angewandt wird.

13. Werkzeug gemäß einem oder mehreren der vorhergehenden Ansprüche, **gekennzeichnet durch** die Tatsache, dass es Abstandhalter (15, 15.1) für das besagte Werkzeug (10') in Bezug auf den Rand (B) der Hohlraumschalterdosen /Schalterdosen (S3)hat, mittels derer das Werkzeug auf dem besagten Rand (B) aufliegt, so dass der Rand, wenn das Werkzeug an die Wand (M) angelegt wird, in die Höhlung (V) versenkt werden kann.

14. Werkzeug gemäß Anspruch 13, **gekennzeichnet durch** die Tatsache, dass die besagten Abstandhalter Mittel mit Schraube und Schraubenmutter (15, 15.1) verwenden.

15. Werkzeug gemäß Anspruch 13, **gekennzeichnet durch** die Tatsache, dass die besagten Abstandhalter aus Abstandhaltestücken bestehen, die zwischen dem besagten Werkzeug und dem Rand eingelegt werden.

16. Verfahren zum Verlegen einer elektrischen Hohlraumschalterdosen /Schalterdosen mit Taststein, das unter Verwendung des Werkzeugs gemäß einem oder mehreren der vorhergehenden Ansprüche durchgeführt wird und das durch die folgenden Arbeitsphasen **gekennzeichnet** ist
- Der Arbeiter legt das Werkzeug (10, 20, 30, 40) in dem Bereich, wo eine Hohlraumschalterdosen / Schalterdosen (S3, S4, S5, S6) versenkt werden soll, an die rohe Wand (M) an, wobei er mindestens eine ihrer Wasserwaagen (13, 14, 23, 24, 33, 34) ins Lot bringt;
- er zeichnet auf der Wand (M) den Außenumriss des Rahmens (10.1, 20.1, 30.1, 40.1) des Werkzeugs nach, wobei er den Rahmen als Maske benutzt;
- er stemmt in die Wand M eine Höhlung V innerhalb des Umrisses P, der durch das Nachzeichnen des Außenumrisses des Rahmens 10.1 entstanden ist;
- dann füllt er fachgerecht die Höhlung (V) mit Stuckgips oder schnell bindendem Mörtel;
- er setzt das Werkzeug auf die Lippe (L, L', L", L'") der Öffnung (A, A', A", A"') der Steckdose und bringt es in Berührung mit dem Rand B derselben. Er fasst dabei das Werkzeug selbst an, während er die Dose in die Höhlung (V) versenkt, bevor der Stuckgips oder der Mörtel gebunden hat;
- diese Arbeit führt er aus, indem er das Werkzeug nach den Anzeigen mindestens einer der beiden Wasserwaagen ausrichtet, während er es an die Wand (M) heranführt, so dass dann der Rand (B) im Wesentlichen bündig auf der vorderen Wandfläche aufliegt;
- während der Stuckgips bzw. der Mörtel abbindet, nimmt der Arbeiter das Werk von der besagten Lippe der Dose ab, die nun über die vordere Wandfläche (M) hervorragt, so dass die Dose (S3) damit korrekt und stabil in die Höhlung (V) der rohen Mauer (M) versenkt ist.

17. Verfahren gemäß Anspruch 16, das durch die Tatsache **gekennzeichnet** ist, dass der Rand (B) der Hohlraumschalterdosen / Schalterdosen mittels des Werkzeugs bündig auf die vordere Wandfläche (M) positioniert wird.

18. Verfahren gemäß Anspruch 16, das durch die Tatsache **gekennzeichnet** ist, dass der Rand (B) der Hohlraumschalterdosen / Schalterdosen mittels des Werkzeugs in der Höhlung (V) der Mauer (M) versenkt wird.

19. Verfahren gemäß Anspruch 18, das durch die Tatsache **gekennzeichnet** ist, dass das besagte Werkzeug (10') beim Verlegen der Dose mittels Abstandhaltern (15, 15.1) mit stufenloser Regulierung in einen Abstand vom besagten Rand (B) gebracht wird.

20. Verfahren gemäß Anspruch 18, das durch die Tatsache **gekennzeichnet** ist, dass das besagte Werkzeug beim Verlegen der Dose (S3) durch den Arbeiter mittels Abstandhaltern von vorher festgelegter Stärke in einen Abstand vom besagten Rand (B) gebracht wird.

21. Die Einfügung in den Patentantrag besteht darin, in die Anspruche Folgendes einzufügen:
Die Öffnung des Gerätes erfolgt nicht nur horizontal siehe Abb. 1.1, sondern auch vertikal.
da beide vertikalen Balken (22.2) halbiert werden und an einem ihrer Enden ein Stift mit Kerben zum Regulieren der Bewegung angebracht wird,
während am anderen Ende ein Blindloch gemacht wird, in das der Stift gesteckt werden kann.
Der Stift des anderen Endes wird ebenfalls in das zugehörige Blindloch gesteckt.
Mit der Hinzufügung der oben beschriebenen Änderung ist das von mir erfundene Werkzeug praktisch nicht mehr nur auf die horizontale Öffnung beschränkt (siehe Abb. 8-10-11), sondern es wird eine vertikale Öffnung hinzugefügt, wodurch das Werkzeug ohne Beschränkungen verlängert werden kann.
Dadurch kann das von mir erfundene Werkzeug/Gerät auch für die Schalterdosen mit Schalterdosen angepasst werden, die bretter als die Standarddosen sind.

22. Eine weitere Einfügung ist ein Laserzeiger, der am Werkzeug angebracht wird, so dass man die Schalterdosen positionieren kann, wenn mehr als eine Dose auf gleicher Höhenlinie zu verlegen ist.
